# EUROPÄISCHE PATENTSCHRIFT

(11) **EP 3 565 984 B1**
(45) Veröffentlichungstag und Bekanntmachung des Hinweises auf die Patenterteilung: **17.02.2021**
(21) Anmeldenummer: 17829590.3
(22) Anmeldetag: 12.12.2017
(51) Int. Cl.: F16D 13/71

(54) **REIBUNGSKUPPLUNG**
FRICTION CLUTCH
EMBRAYAGE À FRICTION

(30) Priorität: 03.01.2017 DE 102017100036
(43) Veröffentlichungstag der Anmeldung: 13.11.2019
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2017/101063
(87) Internationale Veröffentlichungsnummer: WO 2018/127254

(56) Entgegenhaltungen:
- DE-A1- 4 311 908
- DE-A1-102007 000 332
- DE-A1-102014 224 947

## Beschreibung

Die Erfindung betrifft eine Reibungskupplung für einen Antriebsstrang eines Kraftfahrzeugs, insbesondere eine Reibungskupplung, die zwischen einer Antriebseinheit (z. B. einer Verbrennungskraftmaschine) und einem Getriebe eines Kraftfahrzeugs anordenbar ist.

Aus der DE 43 11 908 A1 ist eine Reibungskupplung für einen Antriebsstrang eines Kraftfahrzeugs bekannt. Die Reibungskupplung weist eine Gegendruckplatte, einen mit der Gegendruckplatte verbundenen Kupplungsdeckel und eine bezüglich der Gegendruckplatte in axialer Richtung der Reibungskupplung begrenzt verlagerbare Anpressplatte zur reibschlüssigen Klemmung einer Kupplungsscheibe zwischen der Gegendruckplatte und der Anpressplatte auf. Am Kupplungsdeckel sind in Umfangsrichtung der Reibungskupplung verteilt angeordnete Tellerfederzentrierbolzen vorgesehen, durch die eine Tellerfeder, die in axialer Richtung zwischen der Anpressplatte und dem Kupplungsdeckel angeordnet ist, bezüglich einer Drehachse der Reibungskupplung in einer zentrierten Lage gehalten ist. An den Tellerfederzentrierbolzen sind Blattfedern vorgesehen, durch die die Anpressplatte drehfest und in axialer Richtung begrenzt verlagerbar am Kupplungsdeckel angebunden ist. Die Tellerfeder weist einen Kraftrand auf, der in radialer Richtung der Reibungskupplung über zwei außerhalb der Tellerfederzentrierbolzen angeordnete Drahtringe verkippbar am Kupplungsdeckel abgestützt ist und in radialer Richtung außerhalb der Drahtringe auf die Anpressplatte einwirkt, um bei unbetätigter Tellerfeder die Anpressplatte zur reibschlüssigen Klemmung der Kupplungsscheibe in Richtung der Gegendruckplatte zu verlagern.

In der DE 43 11 908 A1 wird die Tellerfeder durch zwei Drahtringe in axialer Richtung der Reibungskupplung in Position gehalten. Der erste Drahtring ist als kupplungsdeckelseitiger Drahtring ausgebildet und zwischen dem Kupplungsdeckel und der Tellerfeder angeordnet. Der zweite Drahtring ist als anpressplattenseitiger Drahtring ausgebildet und zwischen der Tellerfeder und zum Kupplungsdeckel weisenden Anlageflächen der Blattfedern angeordnet. Die Tellerfederzentrierbolzen sind aufseiten des Kupplungsdeckels mit dem Kupplungsdeckel vernietet und aufseiten der Anpressplatte mit den Blattfedern vernietet. Durch die Vernietung mit dem Kupplungsdeckel und im Zusammenspiel mit den Drahtringen und den Anlageflächen der Blattfedern übernehmen die Tellerfederzentrierbolzen neben der Zentrierfunktion für die Tellerfeder eine Stützkraftfunktion für die Tellerfeder, d.h. stützen die Tellerfeder durch den kupplungsdeckelseitigen Drahtring im unbetätigten Zustand der Tellerfeder zum Kupplungsdeckel und durch den anpressplattenseitigen Drahtring im betätigten Zustand der Tellerfeder zur Anpressplatte hin ab.

In der DE 43 11 908 A1 erscheint es als nachteilig, dass zum Einleiten der Stützkraft in die Tellerfeder zusätzliche Bauteile in Form von zwei Drahtringen erforderlich sind.

Aus der DE 10 2014 244 947 A1 und der DE 10 2007 000 332 A1 sind andere Reibungskupplungen mit Blattfedern bekannt.

Es ist Aufgabe der vorliegenden Erfindung, eine Reibungskupplung anzugeben, bei der die Anzahl der benötigten Bauteile verringert werden kann, ohne dass es zu Beeinträchtigungen während der Betätigung der Reibungskupplung kommt.

Diese Aufgabe wird gelöst mit einer Reibungskupplung gemäß den Merkmalen des unabhängigen Anspruchs. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Reibungskupplung für einen Antriebsstrang eines Kraftfahrzeugs vorgeschlagen. Die Reibungskupplung weist zumindest eine Gegendruckplatte, einen mit der Gegendruckplatte verbundenen Kupplungsdeckel sowie eine bezüglich der Gegendruckplatte in einer axialen Richtung der Reibungskupplung begrenzt verlagerbare Anpressplatte zur reibschlüssigen Klemmung einer Kupplungsscheibe zwischen der Gegendruckplatte und der Anpressplatte auf. Weiter ist am Kupplungsdeckel zumindest eine Tellerfederzentriereinrichtung vorgesehen, durch die eine Tellerfeder, die in axialer Richtung zwischen der Anpressplatte und dem Kupplungsdeckel angeordnet ist, bezüglich einer Drehachse der Reibungskupplung in einer zentrierten Lage gehalten ist. Weiter ist mindestens eine Blattfeder vorgesehen, durch die die Anpressplatte drehfest und in der axialen Richtung begrenzt verlagerbar am Kupplungsdeckel angebunden ist. Die Tellerfeder weist einen Kraftrand auf, der in einer radialer Richtung über eine außerhalb der Tellerfederzentriereinrichtung angeordnete Schwenklagerung verkippbar am Kupplungsdeckel abgestützt ist und in der radialen Richtung außerhalb der Schwenklagerung auf die Anpressplatte einwirkt, um bei unbetätigter Tellerfeder die Anpressplatte zur reibschlüssigen Klemmung der Kupplungsscheibe in Richtung der Gegendruckplatte zu verlagern. Die mindestens eine Blattfeder erstreckt sich in einem ersten Abschnitt von einer ersten Anbindung an der Anpressplatte zumindest entlang der Umfangsrichtung bis zu einer zweiten Anbindung an der Tellerfederzentriereinrichtung; wobei sich die Blattfeder in einem zweiten Abschnitt ausgehend von der zweiten Anbindung zumindest in der Umfangsrichtung weiter erstreckt bis zu einem ersten Ende der Blattfeder, wobei die Blattfeder mit dem zweiten Abschnitt die Tellerfeder mit einem Kontaktpunkt der Blattfeder, insbesondere ständig (im betätigten und unbetätigten Zustand der Tellerfeder), kontaktiert.

Der Kontaktpunkt bezeichnet insbesondere einen punktförmigen, linienförmigen oder flächigen Kontakt der Blattfeder mit der Tellerfeder.

Insbesondere kontaktiert der Kontaktpunkt der Blattfeder die Tellerfeder an der gleichen Position entlang der radialen Richtung wie die Schwenklagerung. Damit wird über die Blattfeder eine konstante Federkraft auf die Tellerfeder ausgeübt. Es ist insbesondere auch möglich, dass der Kontaktpunkt der Blattfeder die Tellerfeder innerhalb oder außerhalb der Schwenklagerung kontaktiert, wobei dann eine von der Betätigung der Tellerfeder abhängige Federkraft auf die Tellerfeder ausgeübt wird.

Um bei der Betätigung der Tellerfeder, insbesondere im Überweg der Tellerfeder, d.h. wenn die Tellerfeder über den maximalen Ausrückweg hinaus bewegt wird, die Funktionsfähigkeit der Reibungskupplung sicherzustellen, und um im Überweg insbesondere eine Bewegung der Anpressplatte in Richtung der Kupplungsscheibe und ggf. ein ungewolltes Schließen der Reibungskupplung zu verhindern, bildet die mindestens eine Blattfeder über die zweite Anbindung (z. B. über einen Tellerfederzentrierbolzen, der als Tellerfederzentriereinrichtung vorgesehen ist) einen Anschlag für die Tellerfeder, den die Tellerfeder berührt, insbesondere zumindest eine der Tellerfederzungen berührt, bevor der Kraftrand der Tellerfeder in radialer Richtung außerhalb der Schwenklagerung eine Innenseite des Kupplungsdeckels berührt.

Somit wird verhindert, dass die Tellerfeder bei einer Betätigung über den maximalen Ausrückweg hinaus im Überweg in einen kritischen Bereich des Überwegs verlagert wird, in dem die durch die mindestens eine Blattfeder über die Anpressplatte in die Tellerfeder eingeleitete Stützkraft nicht ausreicht, um die Tellerfeder in axialer Richtung der Reibungskupplung in Position zu halten. Je nach Position des Anschlags an der mindestens einen Blattfeder kann der Anschlag darüber hinaus dazu genutzt werden, durch Einleiten einer zusätzlichen, in der axialen Richtung wirkenden Kraftkomponente in Richtung der Kupplungsscheibe und in radialer Richtung innerhalb der Schwenklagerung die in radialer Richtung außerhalb der Schwenklagerung in die Tellerfeder eingeleitete Stützkraft zu erhöhen. In jedem Fall ist es durch den Anschlag möglich, den Überweg der Tellerfeder bei Überschreiten des maximalen Ausrückwegs auf ein für die Funktion der Reibungskupplung nicht kritisches Maß zu begrenzen.

Insbesondere umfasst die Reibungskupplung einen Nockenabschnitt, der in radialer Richtung außerhalb der mindestens einen Blattfeder an der Anpressplatte angeordnet ist, und an dem der Kraftrand der Tellerfeder anliegt. Der Nockenabschnitt kann als geschlossener oder als ein an einer oder mehreren Stellen unterbrochener Nockenring ausgebildet sein. Ebenso ist es möglich, dass der Nockenabschnitt mehrere in Umfangsrichtung voneinander beabstandete und sich in axialer Richtung erstreckende Nockenstifte aufweist. Die Oberfläche des Nockenabschnitts, die der Tellerfeder zugewandt ist und an der der Kraftrand der Tellerfeder anliegt, kann flach ausgebildet sein, ist vorzugsweise jedoch verrundet ausgebildet, um die Verkippung der Tellerfeder zu unterstützen bzw. die Reibung zwischen dem Kraftrand der Tellerfeder und der Oberfläche des Nockenabschnitts zu verringern.

Gemäß einem weiteren bevorzugten Ausführungsbeispiel weist die mindestens eine Blattfeder in Umfangsrichtung im Wesentlichen die Form eines Kreisbogenabschnitts auf. Es ist möglich, die kreisbogenabschnittförmige Blattfeder konzentrisch zur Drehachse der Reibungskupplung anzubinden. Jedoch ist es auch möglich, dass die erste Anbindung der Blattfeder an der Anpressplatte und die zweite Anbindung der Blattfeder am Kupplungsdeckel bzw. an den kupplungsdeckelseitigen Tellerfederzentriereinrichtungen auf unterschiedlichen Durchmessern angeordnet sind. In diesem Fall ist es möglich, dass sich die anpressplattenseitigen und die kupplungsdeckelseitigen Enden benachbarter Blattfedern in radialer Richtung betrachtet teilweise überlappen.

Vorzugsweise ist die mindestens eine Blattfeder derart angeordnet, dass sie bei Schubbetrieb des Antriebsstrangs anpresskrafterhöhend sind. Von der Getriebeseite aus betrachtet dreht sich die Kurbelwelle eines Verbrennungsmotors des Kraftfahrzeugs gegen den Uhrzeigersinn, wodurch sich auch die Reibungskupplung von der Getriebeseite aus betrachtet gegen den Uhrzeigersinn dreht. Um die Anpresskraft der Anpressplatte zu erhöhen, ist jede Blattfeder so angeordnet, dass sie von der Getriebeseite aus betrachtet gegen den Uhrzeigersinn vom Kupplungsdeckel zur Anpressplatte hin abfällt, d.h. dass das kupplungsdeckelseitige Ende jeder Blattfeder entgegen dem Uhrzeigersinn vor dem anpressplattenseitigen Ende der entsprechenden Blattfeder angeordnet ist.

Insbesondere ist es von Vorteil, wenn die Blattfedern auf einem ersten Durchmesser an den Tellerfederzentriereinrichtungen angebunden sind (zweite Anbindung) und auf einem zweiten Durchmesser, der größer als der erste Durchmesser ist, an der Anpressplatte (erste Anbindung) angebunden sind. Somit sind die Blattfedern nicht konzentrisch zur Drehachse der Reibungskupplung angeordnet, wodurch sich die Enden benachbarter Blattfedern in radialer Richtung betrachtet teilweise überlappen können, was die Möglichkeit eröffnet, die Länge der Blattfedern zu vergrößern.

Bevorzugt wird eine Stützkraft der Reibungskupplung ausschließlich durch die mindestens eine Blattfeder (bzw. durch alle vorgesehen Blattfedern gemeinsam) bereitgestellt, wobei die Stützkraft (zumindest teilweise) über die Anpressplatte in den Kraftrand der Tellerfeder einleitbar ist.

Bei Betätigung der Tellerfeder werden insbesondere die Tellerfederzungen über z. B. einen konzentrisch zur Drehachse angeordneten Nehmerzylinder entlang der axialen Richtung hin zur Gegenplatte verlagert. Dadurch wird der Kraftrand der Tellerfeder in der entgegensetzen axialen Richtung verlagert und die Anpressplatte kann zusammen mit dem Nockenabschnitt, infolge der Stützkraft der mindestens einen Blattfeder, von der Gegenplatte wegbewegt werden. Dabei kontaktiert die Tellerfeder ständig den Kontaktpunkt der mindestens einen Blattfeder, so dass hier eine weitere (Teil-)Stützkraft auf die Tellerfeder einwirkt.

Bevorzugt wird vorgeschlagen, dass die Stützkraft einerseits durch den ersten Abschnitt und andererseits durch den zweiten Abschnitt der mindestens einen Blattfeder (ständig) bereitgestellt ist.

Insbesondere ist durch den zweiten Abschnitt eine als Druckkraft wirkende Stützkraft bereitgestellt, die im betätigten Zustand der Tellerfeder einer weiteren Verlagerung der Tellerfeder in der axialen Richtung entgegenwirkt.

Damit kann nun die auf die Tellerfeder wirkende Stützkraft erstmals aufgeteilt werden. Über die erste Teilstützkraft wird die Anpressplatte von der Gegenplatte wegbewegt. Durch die zweite Teilstützkraft wird einer weiteren Verlagerung der Tellerfeder entgegengewirkt, so dass eine Bewegung z. B. der zweiten Anbindung hin zur Gegenplatte, z. B. über eine Kontaktierung der Tellerfeder mit der Blattfeder in diesem Bereich der zweiten Anbindung, und eine damit verbundene Reduzierung der ersten Teilstützkraft der Blattfeder, verhindert wird.

Insbesondere weist eine in der axialen Richtung wirkende erste Steifigkeit in N/mm [Newton pro Millimeter] des ersten Abschnitts höchstens 50 %, bevorzugt höchstens 40 % und besonders bevorzugt höchstens 33 %, von einer in der axialen Richtung wirkenden zweiten Steifigkeit in N/mm des zweiten Abschnitts auf.

Die Aufteilung der Stützkraft in zwei Teilstützkräfte hat den Vorteil, dass die Blattfeder gerade in dem ersten Abschnitt eine relativ geringe Dicke und eine relativ geringe Steifigkeit (bzw. Blattfederkraft) aufweist. Damit kann aber auch die Tellerfeder eine reduzierte Tellerfederkraft aufweisen. Die Steifigkeit und Vorspannung der Blattfeder in dem zweiten Abschnitt kann insbesondere über einen Abstand zwischen dem Kontaktpunkt und der zweiten Anbindung der Blattfeder an der Tellerfederzentriereinrichtung eingestellt werden.

Insbesondere weist die Blattfeder in dem ersten Abschnitt eine erste Steifigkeit von 100 bis 200 N/mm auf. Eine solche Steifigkeit erbringt je nach Vorspannweg eine Kraft zwischen 300 und 800 Newton. Diese Vorspannkraft reicht meistens nicht aus, um die gesamte Ausrückkraft (über die Tellerfeder eingebracht) abzustützen. Die restliche Kraft (der Stützkraft) kommt aus dem zusätzlichen zweiten Abschnitt der Blattfeder, der über den Kontaktpunkt unmittelbar die Tellerfeder abstützt. Dieser zweite Abschnitt erbringt mit einer zweiten Steifigkeit von zwischen 400 und 750 N/mm, bevorzugt von ca. 600 N/mm und einem Vorspannweg von 2 mm [Millimeter] eine (statische) Stützkraft von 800 bis 1.500 N [Newton], bevorzugt von 1.200 N. Beide Teilstützkräfte zusammen ergeben dann insbesondere eine summierte Stützkraft von 1.100 bis 2.300 N, bevorzugt von 1.500 bis 2.000 N, die in dieser Höhe völlig ausreichend ist, um die Ausrückkraft der Tellerfeder abzustützen.

Bevorzugt ist die Blattfeder ein Blechteil und der Kontaktpunkt durch eine Umfalzung des Blechteils gebildet. Insbesondere kann der durch die Umfalzung gebildete Kontaktpunkt auch durch eine Umbiegung und/oder Prägung der Blattfeder in dem zweiten Abschnitt gebildet werden. Insbesondere weist die Blattfeder bei einer Umbiegung in dem zweiten Abschnitt eine zum ersten Abschnitt erhöhte Steigung auf. Eine Prägung der Blattfeder umfasst insbesondere eine kugelförmige Prägung, wobei der höchste Punkt der Kugel dann insbesondere den Kontaktpunkt ausbildet. Insbesondere bilden mehrere Blattfedern zusammen ein Blattfederpaket, wobei bevorzugt mehrere Blattfedern bzw. mehrere Blattfederpakete in der Umfangsrichtung um die Drehachse gleichmäßig verteilt zwischen der Anpressplatte und dem Kupplungsdeckel angeordnet sind. Insbesondere weist nur die oberste der Blattfedern, die zusammen ein Blattfederpaket bilden, den die Tellerfeder kontaktierenden Kontaktpunkt auf. Insbesondere erstrecken sich aber alle Blattfedern des Blattfederpakets in der Umfangsrichtung bis zu einem gemeinsamen ersten Ende.

Insbesondere erstreckt sich die Umfalzung ausgehend von der mindestens einen Blattfeder in der axialen Richtung hin zur Tellerfeder, wobei die Umfalzung an einem in der radialen Richtung äußeren Rand der Blattfeder angeordnet ist.

Insbesondere weist die Reibungskupplung mindestens drei Blattfedern oder Blattfederpakete auf, die entlang der Umfangsrichtung gleichmäßig verteilt angeordnet sind. Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine bekannte Reibungskupplung in einer perspektivischen Ansicht im Schnitt;
- Fig. 2:: die Reibungskupplung nach Fig. 1 in einer Seitenansicht im Schnitt;
- Fig. 3:: eine Reibungskupplung in einer perspektivischen Ansicht im Schnitt;
- Fig. 4:: die Reibungskupplung nach Fig. 3 in einer Seitenansicht im Schnitt;
- Fig. 5:: die Reibungskupplung nach Fig. 3 und 4 in einer Draufsicht;
- Fig. 6:: die Reibungskupplung nach Fig. 1 und 2 in einer Seitenansicht im Schnitt, im unbetätigten und im betätigten Zustand;
- Fig. 7:: die Reibungskupplung nach Fig. 3, 4 und 5 in einer Seitenansicht im Schnitt, im unbetätigten und im betätigten Zustand;
- Fig. 8:: Teile der Reibungskupplung nach Fig. 1, 2 und 6 in einer perspektivischen Ansicht;
- Fig. 9:: Teile der Reibungskupplung nach Fig. 3, 4, 5 und 7 in einer perspektivischen Ansicht;
- Fig. 10:: eine Blattfeder der Reibungskupplung nach Fig. 1, 2, 6 und 8 in einer perspektivischen Ansicht; und
- Fig. 11:: eine Blattfeder der Reibungskupplung nach Fig. 3, 4, 5, 7 und 9 in einer perspektivischen Ansicht.

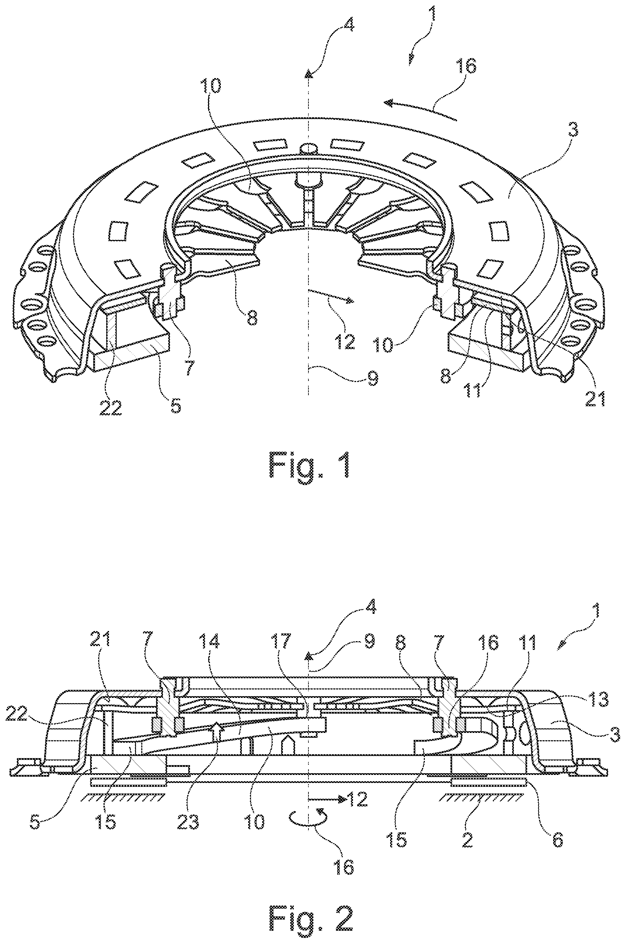

Die Fig. 1 zeigt eine bekannte Reibungskupplung 1 in einer perspektivischen Ansicht im Schnitt. Fig. 2 zeigt die Reibungskupplung 1 nach Fig. 1 in einer Seitenansicht im Schnitt. Die Fig. 1 und 2 werden im Folgenden gemeinsam beschrieben.

Diese Reibungskupplung 1 ist aus der bisher unveröffentlichten DE 10 2016 218 354 bekannt. Die Reibungskupplung 1 weist zumindest eine Gegendruckplatte 2, einen mit der Gegendruckplatte 2 verbundenen Kupplungsdeckel 3 sowie eine bezüglich der Gegendruckplatte 2 in einer axialen Richtung 4 der Reibungskupplung 1 begrenzt verlagerbare Anpressplatte 5 zur reibschlüssigen Klemmung einer Kupplungsscheibe 6 zwischen der Gegendruckplatte 2 und der Anpressplatte 5 auf. Weist ist am Kupplungsdeckel 3 eine Mehrzahl von Tellerfederzentriereinrichtungen 7 in Form von Tellerfederzentrierbolzen vorgesehen, durch die eine Tellerfeder 8, die in axialer Richtung 4 zwischen der Anpressplatte 5 und dem Kupplungsdeckel 3 angeordnet ist, bezüglich einer Drehachse 9 der Reibungskupplung 1 in einer zentrierten Lage gehalten ist. Weiter ist eine Mehrzahl von Blattfedern 10 vorgesehen, durch die die Anpressplatte 5 drehfest und in der axialen Richtung 4 begrenzt verlagerbar am Kupplungsdeckel 3 angebunden ist. Die Tellerfeder 8 weist einen Kraftrand 11 auf, der in einer radialen Richtung 12 über eine außerhalb der Tellerfederzentriereinrichtung 7 am Kupplungsdeckel 3 angeordnete Schwenklagerung 13 (hier Nocken, die in den Kupplungsdeckel 3 eingeprägt sind) verkippbar am Kupplungsdeckel 3 abgestützt ist und in der radialen Richtung 12 außerhalb der Schwenklagerung 13 auf die Anpressplatte 5 einwirkt, um bei unbetätigter Tellerfeder 8 die Anpressplatte 5 zur reibschlüssigen Klemmung der Kupplungsscheibe 6 in Richtung der Gegendruckplatte 2 zu verlagern. Die Blattfedern 10 erstrecken sich in einem ersten Abschnitt 14 von einer ersten Anbindung 15 an der Anpressplatte 5 zumindest entlang der Umfangsrichtung 16 bis zu einer zweiten Anbindung 17 an der Tellerfederzentriereinrichtung 7.

Die Tellerfeder 8 ist zumindest im unbetätigten Zustand der Reibungskupplung 1 im Bereich der Tellerfederzentriereinrichtungen 7 in axialer Richtung A ungelagert. Dies bedeutet, dass die Tellerfeder 8 in diesem Bereich lediglich bezüglich der Drehachse 9 der Reibungskupplung 1 zentriert ist, in diesem Bereich jedoch keine Axialkräfte auf die Tellerfeder 8 übertragen werden können bzw. in diesem Bereich die Tellerfeder 8 keine Axialkräfte auf benachbarte Bauteile übertragen kann. Ferner ist die Tellerfeder 8 über eine in radialer Richtung 12 außerhalb der Tellerfederzentrierbolzen angeordnete Schwenklagerung 13 verkippbar am Kupplungsdeckel 5 abgestützt. In radialer Richtung 12 außerhalb der Schwenklagerung 13 wirkt die Tellerfeder 8, genauer gesagt der Kraftrand 11 der Tellerfeder 8, auf den Nockenabschnitt 22 ein, um bei unbetätigter Tellerfeder 8 die Anpressplatte 5 zur reibschlüssigen Klemmung der Kupplungsscheibe 6 entgegen der in Ausrückrichtung wirkenden Stützkraft 23 der Blattfedern 10 in Richtung der Gegendruckplatte 2 zu verlagern. Somit ist die Reibungskupplung 1 vorzugsweise als normal-eingerückte Reibungskupplung 1 ausgebildet. Wenn die Tellerfeder 8 durch das Betätigungssystem, beispielsweise durch den konzentrischen Nehmerzylinder betätigt wird, verringert sich während der Verkippung der Tellerfeder 8 die auf die Anpressplatte 5 ausgeübte Tellerfederkraft, sodass die Blattfedern 10 die Anpressplatte 5 in Ausrückrichtung entlang der axialen Richtung 4 verlagern können, um die reibschlüssige Klemmung der Kupplungsscheibe 6 aufzuheben. Die Blattfedern 10 und/oder die erste Anbindung 15 der Blattfedern 10 an der Anpressplatte 5 bilden im betätigten Zustand der Tellerfeder 8 einen Anschlag für die Tellerfeder 8, den zumindest eine Tellerfederzunge der Tellerfeder 8 berührt, bevor der Kraftrand 11 der Tellerfeder 8 in radialer Richtung 12 außerhalb der Schwenklagerung 13 die Innenseite 21 des Kupplungsdeckels 3 berührt. Dadurch ist es möglich, bei Überschreiten des maximalen Ausrückwegs der Tellerfeder 8 einen gewissen Überweg der Tellerfeder 8 zu ermöglichen, gleichzeitig jedoch zu verhindern, dass die Tellerfeder 8 so weit in den Überweg bewegt wird, dass die Stützkraft 23 der Blattfedern 10 nicht mehr ausreicht, um die Tellerfeder 8 abzustützen, wodurch sich die Anpressplatte 5 im Überweg in Richtung der Kupplungsscheibe 6 bewegen würde, um die Reibungskupplung 1 ungewollt zu schließen.

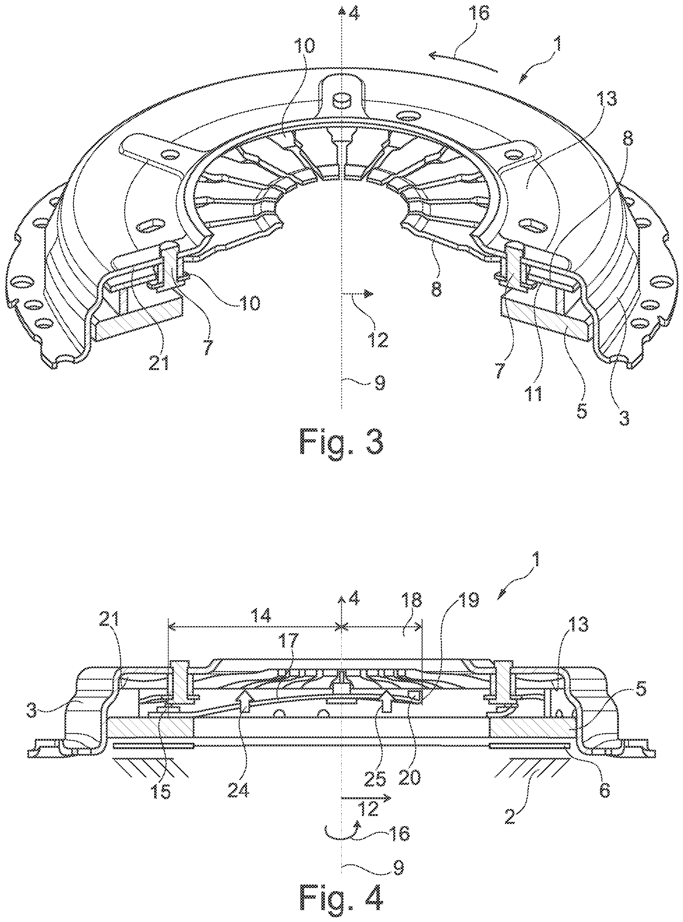

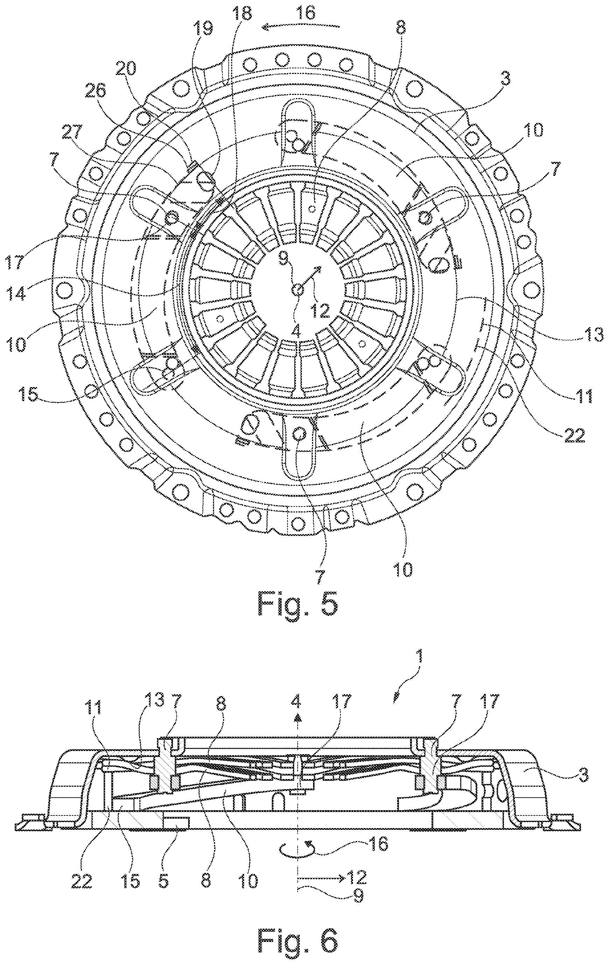

Fig. 3 zeigt eine Reibungskupplung 1 in einer perspektivischen Ansicht im Schnitt. Fig. 4 zeigt die Reibungskupplung 1 nach Fig. 3 in einer Seitenansicht im Schnitt. Fig. 5 zeigt die Reibungskupplung 1 nach Fig. 3 und 4 in einer Draufsicht. Die Fig. 3 bis 5 werden im Folgenden gemeinsam beschrieben. Auf die Ausführungen zur der Reibungskupplung 1 nach Fig. 1 und 2 wird verwiesen.

Im Unterschied zur bekannten Reibungskupplung 1 werden hier anders gestaltete Blattfedern 10 eingesetzt. Die Reibungskupplung 1 weist zumindest eine Gegendruckplatte 2, einen mit der Gegendruckplatte 2 verbundenen Kupplungsdeckel 3 sowie eine bezüglich der Gegendruckplatte 2 in einer axialen Richtung 4 der Reibungskupplung 1 begrenzt verlagerbare Anpressplatte 5 zur reibschlüssigen Klemmung einer Kupplungsscheibe 6 zwischen der Gegendruckplatte 2 und der Anpressplatte 5 auf. Weist ist am Kupplungsdeckel 3 eine Mehrzahl von Tellerfederzentriereinrichtungen 7 in Form von Tellerfederzentrierbolzen vorgesehen, durch die eine Tellerfeder 8, die in axialer Richtung 4 zwischen der Anpressplatte 5 und dem Kupplungsdeckel 3 angeordnet ist, bezüglich einer Drehachse 9 der Reibungskupplung 1 in einer zentrierten Lage gehalten ist. Weiter ist eine Mehrzahl von Blattfedern 10 vorgesehen, durch die die Anpressplatte 5 drehfest und in der axialen Richtung 4 begrenzt verlagerbar am Kupplungsdeckel 3 angebunden ist. Die Tellerfeder 8 weist einen Kraftrand 11 auf, der in einer radialen Richtung 12 über eine außerhalb der Tellerfederzentriereinrichtung 7 am Kupplungsdeckel 3 angeordnete Schwenklagerung 13 (hier Nocken, die in den Kupplungsdeckel 3 eingeprägt sind) verkippbar am Kupplungsdeckel 3 abgestützt ist und in der radialen Richtung 12 außerhalb der Schwenklagerung 13 auf die Anpressplatte 5 einwirkt, um bei unbetätigter Tellerfeder 8 die Anpressplatte 5 zur reibschlüssigen Klemmung der Kupplungsscheibe 6 in Richtung der Gegendruckplatte 2 zu verlagern. Die Blattfedern 10 erstrecken sich in einem ersten Abschnitt 14 von einer ersten Anbindung 15 an der Anpressplatte 5 zumindest entlang der Umfangsrichtung 16 bis zu einer zweiten Anbindung 17 an der Tellerfederzentriereinrichtung 7. Die Blattfedern 10 erstrecken sich in einem zweiten Abschnitt 18 ausgehend von der zweiten Anbindung 17 zumindest in der Umfangsrichtung 16 weiter bis zu einem erste Ende 19 der jeweiligen Blattfeder 10, wobei die Blattfedern 10 mit dem zweiten Abschnitt 18 die Tellerfeder 8 mit jeweils einem Kontaktpunkt 20 der Blattfedern 10 ständig (im betätigten und unbetätigten Zustand der Tellerfeder 8) kontaktieren.

Um bei der Betätigung der Tellerfeder 8, insbesondere im Überweg der Tellerfeder 8, d.h. wenn die Tellerfeder 8 über den maximalen Ausrückweg hinaus bewegt wird, die Funktionsfähigkeit der Reibungskupplung 1 sicherzustellen, und um im Überweg eine Bewegung der Anpressplatte 5 in Richtung der Kupplungsscheibe 6 und ggf. ein ungewolltes Schließen der Reibungskupplung 1 zu verhindern, bildet die Mehrzahl der-Blattfedern 10 über die zweite Anbindung 17 einen Anschlag für die Tellerfeder 8, den die Tellerfeder 8 berührt, insbesondere zumindest eine der Tellerfederzungen berührt, bevor der Kraftrand 11 der Tellerfeder 8 in radialer Richtung 12 außerhalb der Schwenklagerung 13 eine Innenseite 21 des Kupplungsdeckels 3 berührt.

Somit wird verhindert, dass die Tellerfeder 8 bei einer Betätigung über den maximalen Ausrückweg hinaus im Überweg in einen kritischen Bereich des Überwegs verlagert wird, in dem die durch die Blattfedern 10 über die Anpressplatte 5 in die Tellerfeder 8 eingeleitete Stützkraft 23 nicht ausreicht, um die Tellerfeder 8 in axialer Richtung 4 der Reibungskupplung 1 in Position zu halten. Je nach Position des Kontaktpunkts 20 an den Blattfedern 10 kann der Kontaktpunkt 20 darüber hinaus dazu genutzt werden, durch Einleiten einer zusätzlichen, in der axialen Richtung 4 wirkenden Kraftkomponente in Richtung der Kupplungsscheibe 6 und in radialer Richtung 12 innerhalb der Schwenklagerung 13 die in radialer Richtung 12 außerhalb der Schwenklagerung 13 in die Tellerfeder 8 eingeleitete Stützkraft 23 zu erhöhen.

Dieser Kontaktpunkt 20 kontaktiert die Tellerfeder 8 ständig, d. h. im betätigten wie auch im unbetätigten Zustand. Hier kontaktiert der Kontaktpunkt 20 die Tellerfeder 8 im Bereich der Schwenklagerung 13. Bei einer weiteren Verlagerung der Tellerfedern 8, insbesondere der Tellerfederzungen, entlang der axialen Richtung 4 infolge der Betätigung der Tellerfeder 8, kontaktiert die Tellerfeder 8 gegebenenfalls weitere Bereiche der Blattfedern 10. Dabei kontaktiert die Tellerfeder 8 die Blattfedern 10 im Bereich der zweiten Anbindung 17, also im Bereich der Tellerfederzentriereinrichtung 7. Diese Kontaktierung erfolgt im betätigten Zustand der Tellerfeder 8 bevor der Kraftrand 11 der Tellerfeder 8 in radialer Richtung 12 außerhalb der Schwenklagerung 13 eine Innenseite 21 des Kupplungsdeckels 3 kontaktiert.

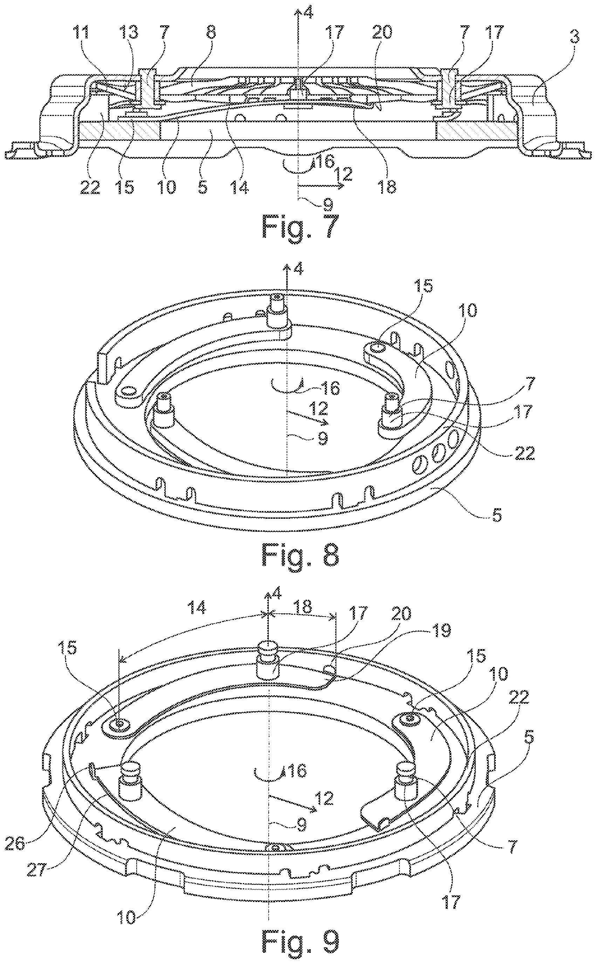

Weiter umfasst die Reibungskupplung 1 einen Nockenabschnitt 22, der in radialer Richtung 12 außerhalb der Blattfedern 10 an der Anpressplatte 5 angeordnet ist, und an dem der Kraftrand 11 der Tellerfeder 8 anliegt. Der Nockenabschnitt 22 kann als geschlossener (siehe Fig. 9) oder als ein an einer oder mehreren Stellen unterbrochener Nockenring (siehe Fig. 8) ausgebildet sein. Die Oberfläche des Nockenabschnitts 22, die der Tellerfeder 8 zugewandt ist und an der der Kraftrand 11 der Tellerfeder anliegt, ist verrundet ausgebildet, um die Verkippung der Tellerfeder 8 zu unterstützen bzw. die Reibung zwischen dem Kraftrand 11 der Tellerfeder 8 und der Oberfläche des Nockenabschnitts 22 zu verringern.

Die Blattfedern 10 weisen in Umfangsrichtung 16 im Wesentlichen die Form eines Kreisbogenabschnitts auf. Hier sind die kreisbogenabschnittförmigen Blattfedern 10 im Wesentlichen konzentrisch zur Drehachse 9 der Reibungskupplung 1 angebunden (siehe Fig. 5). Es ist jedoch ersichtlich, dass die erste Anbindung 15 der Blattfeder 10 an der Anpressplatte 5 und die zweite Anbindung 17 der Blattfeder 10 am Kupplungsdeckel 3 bzw. an den kupplungsdeckelseitigen Tellerfederzentriereinrichtungen 7 auf (leicht) unterschiedlichen Durchmessern angeordnet sind.

Eine Stützkraft 23 der Reibungskupplung 1 wird ausschließlich durch die Blattfedern 10 bereitgestellt, wobei die Stützkraft 23 (zumindest teilweise) über die Anpressplatte 5 in den Kraftrand 11 der Tellerfeder 8 einleitbar ist.

Bei Betätigung der Tellerfeder 8 werden insbesondere die Tellerfederzungen über z. B. einen konzentrisch zur Drehachse angeordneten Nehmerzylinder entlang der axialen Richtung 4 hin zur Gegenplatte 2 verlagert. Dadurch wird der Kraftrand 11 der Tellerfeder 8 in der entgegensetzen axialen Richtung 4 verlagert und die Anpressplatte 5 kann zusammen mit dem Nockenabschnitt 22, infolge der Stützkraft 23 der Blattfedern 10, von der Gegenplatte 2 wegbewegt werden. Bei einer weiteren Verlagerung der Tellerfederzungen entlang der axialen Richtung 4 kontaktiert die Tellerfeder 8 den Anschlag 20, so dass hier eine weitere (Teil-)Stützkraft auf die Tellerfeder 8 einwirkt.

Die Stützkraft 23 wird dann einerseits durch den ersten Abschnitt 14 und andererseits durch den zweiten Abschnitt 18 jeder Blattfeder 10 bereitgestellt. Durch den zweiten Abschnitt 18 wird eine als Druckkraft wirkende Stützkraft bereitgestellt, die aufgrund der Vorspannung und Steifigkeit der Blattfeder 10 einer Verlagerung der Tellerfeder 8 in der axialen Richtung 4 entgegenwirkt. Der zweite Abschnitt 18 der Blattfeder 10 stützt sich dazu an der Tellerfederzentriereinrichtung 7 ab. Damit kann die auf die Tellerfeder 8 wirkende Stützkraft 23 erstmals aufgeteilt werden. Über die erste Teilstützkraft 24 wird die Anpressplatte 5 von der Gegenplatte 2 wegbewegt. Durch die zweite Teilstützkraft 25 wird einer weiteren Verlagerung der Tellerfeder 8 entgegengewirkt, so dass eine Bewegung z. B. der zweiten Anbindung 17 hin zur Gegenplatte 2, z. B. über eine Kontaktierung der Tellerfeder 8 mit der Blattfeder 10 in diesem Bereich der zweiten Anbindung 17, und eine damit verbundene Reduzierung der ersten Teilstützkraft 24 der Blattfeder 10, verhindert wird.

Die Aufteilung der Stützkraft 23 in zwei Teilstützkräfte 24, 25 hat den Vorteil, dass die Blattfeder 10 gerade in dem ersten Abschnitt 14 eine relativ geringe Dicke und eine relativ geringe Steifigkeit aufweist (z. B. im Vergleich zur Reibungskupplung, die aus der DE 10 2016 218 354 bekannt ist, vgl. Fig. 1 und 2). Damit kann aber auch die Tellerfeder 8 eine reduzierte Tellerfederkraft aufweisen. Die Federkraft der Blattfeder 10 in dem zweiten Abschnitt 18 kann z. B. über einen Abstand zwischen dem Kontaktpunkt 20 und der zweiten Anbindung 17 der Blattfeder 10 an der Tellerfederzentriereinrichtung 7 eingestellt werden.

Die Blattfeder 10 ist als ein Blechteil und der Kontaktpunkt 20 durch eine Umfalzung 26 des Blechteils ausgebildet. Mehrere Blattfedern 10 sind in der Umfangsrichtung 16 um die Drehachse 9 gleichmäßig verteilt zwischen der Anpressplatte 5 und dem Kupplungsdeckel 3 angeordnet. Die Umfalzung 26 erstreckt sich ausgehend von der Blattfeder 10 in der axialen Richtung 4 hin zur Tellerfeder 7, wobei die Umfalzung 26 an einem in der radialen Richtung 12 äußeren Rand 27 der Blattfeder 10 angeordnet ist.

Fig. 6 zeigt die Reibungskupplung 1 nach Fig. 1 und 2 in einer Seitenansicht im Schnitt, im unbetätigten und im betätigten Zustand. Auf die Ausführungen zu Fig. 1 und 2 wird Bezug genommen. Die Tellerfeder 8 kontaktiert im betätigten Zustand der Tellerfeder 8 die Blattfeder 10, hier mit den Tellerfederzungen im Bereich der Tellerfederzentriereinrichtung 7, bevor der Kraftrand 11 der Tellerfeder 8 in radialer Richtung 12 außerhalb der Schwenklagerung 13 eine Innenseite 21 des Kupplungsdeckels 3 kontaktiert.

Fig. 7 zeigt die Reibungskupplung 1 nach Fig. 3, 4 und 5 in einer Seitenansicht im Schnitt, im unbetätigten und im betätigten Zustand. Auf die Ausführungen zu Fig. 3 bis 5 wird Bezug genommen. Die Tellerfeder 8 kontaktiert den Kontaktpunkt 20 des zweiten Abschnitts 18 der Blattfedern 10. Durch diese zweite Teilstützkraft 25 wird eine solch große Stützkraft 23 bereitgestellt, dass die Betätigungskraft der Tellerfeder 8 ausgeglichen werden kann. Durch die erste Teilstützkraft 24 des ersten Abschnitts 14 kann die Anpressplatte 5 von der Gegenplatte 2 wegbewegt werden und die Reibungskupplung 1 wird geöffnet.

Fig. 8 zeigt Teile der Reibungskupplung 1 nach Fig. 1, 2 und 6 in einer perspektivischen Ansicht. Hier sind die Anpressplatte 5, der offen ausgeführte Nockenabschnitt 22 und die Blattfedern 10 zusammen mit den Tellerfederzentriereinrichtungen 7 dargestellt. Die Blattfedern 10 erstrecken sich ausgehend von einer ersten Anbindung 15 an der Anpressplatte 5 zumindest entlang der Umfangsrichtung 9 hin zu einer zweiten Anbindung 17 an der Tellerfederzentriereinrichtung 7, die ihrerseits mit dem Kupplungsdeckel 3 verbunden ist.

Fig. 9 zeigt Teile der Reibungskupplung nach Fig. 3, 4, 5 und 7 in einer perspektivischen Ansicht. Hier sind die Anpressplatte 5, der offen ausgeführte Nockenabschnitt 22 und die Blattfedern 10 zusammen mit den Tellerfederzentriereinrichtungen 7 dargestellt. Die Blattfedern 10 erstrecken sich mit einem ersten Abschnitt 14 ausgehend von einer ersten Anbindung 15 an der Anpressplatte 5 zumindest entlang der Umfangsrichtung 9 hin zu einer zweiten Anbindung 17 an der Tellerfederzentriereinrichtung 7, die ihrerseits mit dem Kupplungsdeckel 3 verbunden ist. Die Blattfedern 10 erstrecken sich in einem zweiten Abschnitt 18 ausgehend von der zweiten Anbindung 17 entlang der Umfangsrichtung 9 hin zu einem ersten Ende 19. An dem ersten Ende 19 ist der Kontaktpunkt 20 ausgebildet. Der Kontaktpunkt 20 wird durch eine Umfalzung 26 des Blechteils der Blattfeder 10 gebildet. Die Umfalzung 26 ist an einem äußeren Rand 27 der Blattfeder 10 angeordnet und erstreckt sich in der axialen Richtung 4 hin zum Kupplungsdeckel 3. Auf die Ausführungen zu den Fig. 3, 4, 5 und 7 wird verwiesen.

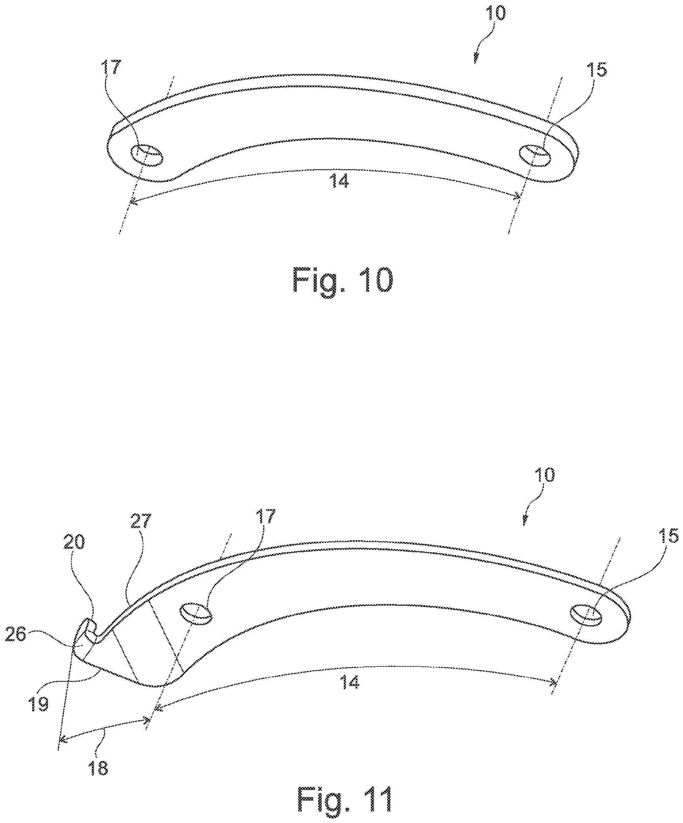

Fig. 10 zeigt eine Blattfeder 10 der Reibungskupplung 1 nach Fig. 1, 2, 6 und 8 in einer perspektivischen Ansicht. Auf die Ausführungen zu Fig. 8 wird verwiesen. Die Blattfeder 10 erstreckt sich mit einem ersten Abschnitt 14 ausgehend von einer ersten Anbindung 15 an der Anpressplatte 5 zumindest entlang der Umfangsrichtung 9 hin zu einer zweiten Anbindung 17.

Fig. 11 zeigt eine Blattfeder 10 der Reibungskupplung 1 nach Fig. 3, 4, 5, 7 und 9 in einer perspektivischen Ansicht. Auf die Ausführungen zu Fig. 9 wird verwiesen. Die Blattfeder 10 erstreckt sich mit einem ersten Abschnitt 14 ausgehend von einer ersten Anbindung 15 zumindest entlang der Umfangsrichtung 9 hin zu einer zweiten Anbindung 17. Die Blattfeder 10 erstreckt sich in einem zweiten Abschnitt 18 ausgehend von der zweiten Anbindung 17 entlang der Umfangsrichtung 9 hin zu einem ersten Ende 19. An dem ersten Ende 19 ist der Kontaktpunkt 20 ausgebildet. Der Kontaktpunkt 20 wird durch eine Umfalzung 26 des Blechteils der Blattfeder 10 gebildet. Die Umfalzung 26 ist an einem äußeren Rand 27 der Blattfeder 10 angeordnet und erstreckt sich in der axialen Richtung 4 hin zum Kupplungsdeckel 3.

### Bezugszeichenliste

- 1: Reibungskupplung
- 2: Gegendruckplatte
- 3: Kupplungsdeckel
- 4: axiale Richtung
- 5: Anpressplatte
- 6: Kupplungsscheibe
- 7: Tellerfederzentriereinrichtung
- 8: Tellerfeder
- 9: Drehachse
- 10: Blattfeder
- 11: Kraftrand
- 12: radiale Richtung
- 13: Schwenklagerung
- 14: erster Abschnitt
- 15: erste Anbindung
- 16: Umfangsrichtung
- 17: zweite Anbindung
- 18: zweiter Abschnitt
- 19: erstes Ende
- 20: Kontaktpunkt
- 21: Innenseite
- 22: Nockenabschnitt
- 23: Stützkraft
- 24: erste Teilstützkraft
- 25: zweite Teilstützkraft
- 26: Umfalzung
- 27: Rand

## Patentansprüche

1. Reibungskupplung (1) für einen Antriebsstrang eines Kraftfahrzeugs, zumindest aufweisend eine Gegendruckplatte (2), einen mit der Gegendruckplatte (2) verbundenen Kupplungsdeckel (3) sowie eine bezüglich der Gegendruckplatte (2) in einer axialen Richtung (4) der Reibungskupplung (1) begrenzt verlagerbare Anpressplatte (5) zur reibschlüssigen Klemmung einer Kupplungsscheibe (6) zwischen der Gegendruckplatte (2) und der Anpressplatte (5), wobei am Kupplungsdeckel (3) zumindest eine Tellerfederzentriereinrichtung (7) vorgesehen ist, durch die eine Tellerfeder (8), die in der axialen Richtung (4) zwischen der Anpressplatte (5) und dem Kupplungsdeckel (3) angeordnet ist, bezüglich einer Drehachse (9) der Reibungskupplung (1) in einer zentrierten Lage gehalten ist; wobei mindestens eine Blattfeder (10) vorgesehen ist, durch die die Anpressplatte (5) drehfest und in der axialen Richtung (4) begrenzt verlagerbar am Kupplungsdeckel (3) angebunden ist, und wobei die Tellerfeder (8) einen Kraftrand (11) aufweist, der in einer radialer Richtung (12) über eine außerhalb der Tellerfederzentriereinrichtung (6) angeordnete Schwenklagerung (13) verkippbar am Kupplungsdeckel (3) abgestützt ist und in der radialen Richtung (12) außerhalb der Schwenklagerung (13) auf die Anpressplatte (5) einwirkt, um bei unbetätigter Tellerfeder (8) die Anpressplatte (5) zur reibschlüssigen Klemmung der Kupplungsscheibe (6) in Richtung der Gegendruckplatte (2) zu verlagern; **dadurch gekennzeichnet, dass** sich die mindestens eine Blattfeder (10) in einem ersten Abschnitt (14) von einer ersten Anbindung (15) an der Anpressplatte (5) zumindest entlang einer Umfangsrichtung (16) bis zu einer zweiten Anbindung (17) an der Tellerfederzentriereinrichtung (6) erstreckt; wobei sich die Blattfeder (10) in einem zweiten Abschnitt (18) ausgehend von der zweiten Anbindung (17) zumindest in der Umfangsrichtung (16) weiter erstreckt bis zu einem erste Ende (19) der Blattfeder (10), wobei die Blattfeder (10) mit dem zweiten Abschnitt (18) die Tellerfeder (8) mit einem Kontaktpunkt (20) der Blattfeder (10) kontaktiert.

2. Reibungskupplung (1) nach Anspruch 1, wobei der Kontaktpunkt (20) die Tellerfeder (8) in radialer Richtung (12) im Bereich der Schwenklagerung (13) kontaktiert.

3. Reibungskupplung (1) nach einem der vorhergehenden Ansprüche, wobei die Reibungskupplung (1) einen Nockenabschnitt (22) umfasst, der in der radialen Richtung (12) außerhalb der mindestens einen Blattfeder (10) an der Anpressplatte (5) angeordnet ist, und an dem der Kraftrand (11) der Tellerfeder (8) anliegt.

4. Reibungskupplung (1) nach einem der vorhergehenden Ansprüche, wobei eine Stützkraft (23) der Reibungskupplung (1) ausschließlich durch die mindestens eine Blattfeder (10) bereitgestellt ist, wobei die Stützkraft (23) zumindest teilweise über die Anpressplatte (5) in den Kraftrand (11) der Tellerfeder (8) einleitbar ist.

5. Reibungskupplung (1) nach Anspruch 4, wobei die Stützkraft (23) einerseits durch den ersten Abschnitt (14) als erste Teilstützkraft (24) und andererseits durch den zweiten Abschnitt (18) als zweite Teilstützkraft (25) der mindestens einen Blattfeder (10) bereitgestellt ist.

6. Reibungskupplung (1) nach Anspruch 5, wobei durch den zweiten Abschnitt (18) eine als Druckkraft wirkende zweite Teilstützkraft (24) bereitgestellt ist, die im einer Verlagerung der Tellerfeder (8) in der axialen Richtung (4) entgegenwirkt.

7. Reibungskupplung (1) nach einem der vorhergehenden Ansprüche, wobei eine in der axialen Richtung (4) wirkende erste Steifigkeit in N/mm [Newton pro Millimeter] des ersten Abschnitts (15) höchstens 50 % von einer in der axialen Richtung (4) wirkenden zweiten Steifigkeit in N/mm des zweiten Abschnitts (18) aufweist.

8. Reibungskupplung (1) nach einem der vorhergehenden Ansprüche, wobei die Blattfeder (10) ein Blechteil ist und der Kontaktpunkt (20) durch eine Umfalzung (26) des Blechteils gebildet ist.

9. Reibungskupplung (1) nach Anspruch 8, wobei die Umfalzung (26) sich ausgehend von der Blattfeder (10) in der axialen Richtung (4) hin zur Tellerfeder (8) erstreckt, wobei die Umfalzung (26) an einem in der radialen Richtung (12) äußeren Rand (27) der Blattfeder (10) angeordnet ist.

10. Reibungskupplung (1) nach einem der vorhergehenden Ansprüche, wobei die Reibungskupplung (1) mindestens drei Blattfedern (10) oder Blattfederpakete aufweist, die entlang der Umfangsrichtung (16) gleichmäßig verteilt angeordnet sind.

## Claims

1. A friction clutch (1) for a drive train of a motor vehicle, at least having a counter-pressure plate (2), a clutch cover (3) connected to the counter-pressure plate (2) and a pressing plate (5), which can be displaced to a limited extent in an axial direction (4) of the friction clutch (1) with respect to the counter-pressure plate (2), for frictionally locking a clutch disc (6) between the counter-pressure plate (2) and the pressing plate (5), wherein at least one disc spring centring device (7) is provided on the clutch cover (3), through which a disc spring (8), which is arranged in the axial direction (4) between the pressing plate (5) and the clutch cover (3), is held in a centred position with respect to an axis of rotation (9) of the friction clutch (1); wherein at least one leaf spring (10) is provided, by which the pressing plate (5) is connected to the clutch cover (3) in a rotationally fixed manner and can be displaced to a limited extent in the axial direction (4), and wherein the plate spring (8) has a force edge (11) which is tiltably supported on the clutch cover (3) in a radial direction (12) via a pivot bearing (13) arranged outside the plate spring centring device (6) and acts on the pressing plate (5) in the radial direction (12) outside the pivot bearing (13) to displace the pressing plate (5) for frictional clamping of the clutch disc (6) in the direction of the counter-pressure plate (2) when the disc spring (8) is not actuated; **characterised in that** the at least one leaf spring (10) extends in a first section (14) from a first connection (15) on the pressing plate (5) at least along a circumferential direction (16) to a second connection (17) on the disc spring centring device (6); wherein the leaf spring (10) further extends in a second section (18) starting from the second connection (17) at least in the circumferential direction (16) to a first end (19) of the leaf spring (10), wherein the leaf spring (10) with the second section (18) makes contact with the disc spring (8) having a contact point (20) of the leaf spring (10).

2. The friction clutch (1) according to claim 1, wherein the contact point (20) makes contact with the disc spring (8) in the radial direction (12) in the region of the pivot bearing (13).

3. The friction clutch (1) according to any one of the preceding claims, wherein the friction clutch (1) comprises a cam section (22), which is arranged in the radial direction (12) outside of the at least one leaf spring (10) on the pressing plate (5), and on which the force edge (11) of the disc spring (8) abuts.

4. The friction clutch (1) according to any one of the preceding claims, wherein a supporting force (23) of the friction clutch (1) is provided exclusively by the at least one leaf spring (10), wherein the supporting force (23) can be introduced at least partially via the pressing plate (5) into the force edge (11) of the disc spring (8).

5. The friction clutch (1) according to claim 4, wherein the supporting force (23) is provided on the one hand by the first section (14) as a first partial supporting force (24) and on the other hand by the second section (18) as a second partial supporting force (25) of the at least one leaf spring (10).

6. The friction clutch (1) according to claim 5, wherein a second partial supporting force (24) acting as a compressive force is provided by the second section (18), which partial supporting force counteracts a displacement of the disc spring (8) in the axial direction (4).

7. The friction clutch (1) according to any one of the preceding claims, wherein a first rigidity in N/mm [Newtons per millimetre] of the first section (15) acting in the axial direction (4) is at most 50% of a second rigidity in N/mm of the second section (18) acting in the axial direction (4).

8. The friction clutch (1) according to any one of the preceding claims, wherein the leaf spring (10) is a sheet metal part and the contact point (20) is formed by a crimping (26) of the sheet metal part.

9. The friction clutch (1) according to claim 8, wherein the crimping (26) extends from the leaf spring (10) in the axial direction (4) towards the disc spring (8), wherein the crimping (26) is arranged at an outer edge (27) of the leaf spring (10) in the radial direction (12).

10. The friction clutch (1) according to any one of the preceding claims, wherein the friction clutch (1) has at least three leaf springs (10) or leaf spring assemblies, which are arranged evenly distributed along the circumferential direction (16).

## Revendications

1. Embrayage à friction (1) pour une chaîne cinématique d'un véhicule à moteur, comprenant au moins un plateau de contre-pression (2), un couvercle d'embrayage (3) relié au plateau de contre-pression (2) ainsi qu'un plateau de pression (5), pouvant être déplacé de manière limitée par rapport au plateau de contre-pression (2) dans une direction axiale (4) de l'embrayage à friction (1), destiné au serrage par friction d'un disque d'embrayage (6) entre le plateau de contre-pression (2) et le plateau de pression (5), dans lequel, sur le couvercle d'embrayage (3), au moins un dispositif de centrage de ressort à disque (7) est situé, au moyen duquel un ressort à disque (8), lequel est disposé dans la direction axiale (4) entre le plateau de pression (5) et le couvercle d'embrayage (3), est maintenu dans une position centrée par rapport à un axe de rotation (9) de l'embrayage à friction (1) ; dans lequel au moins un ressort à lame (10) est situé, au moyen duquel le plateau de pression (5) est relié au couvercle d'embrayage (3) solidaire en rotation et peut être déplacé de manière limitée dans la direction axiale (4), et dans lequel le ressort à disque (8) comprend un bord de force (11), lequel est supporté de manière inclinable sur le couvercle d'embrayage (3) dans une direction radiale (12) au moyen d'un palier de pivotement (13) disposé à l'extérieur du dispositif de centrage de ressort à disque (6) et agit sur le plateau de pression (5) dans la direction radiale (12) à l'extérieur du palier de pivotement (13) pour, lorsque le ressort à disque (8) n'est pas actionné, déplacer le plateau de pression (5) pour le serrage par friction du disque d'embrayage (6) dans la direction du plateau de contre-pression (2) ;
**caractérisé en ce que**
l'au moins un ressort à lame (10) s'étend dans une première section (14) depuis une première liaison (15) sur le plateau de pression (5) au moins le long d'une direction circonférentielle (16) jusqu'à une seconde liaison (17) sur le dispositif de centrage de ressort à disque (6) ; dans lequel le ressort à lame (10) s'étend en outre dans une seconde section (18) à partir de la seconde liaison (17) au moins dans la direction circonférentielle (16) jusqu'à une première extrémité (19) du ressort à lame (10), dans lequel le ressort à lame (10), avec la seconde section (18), entre en contact avec le ressort à disque (8) par un point de contact (20) du ressort à lame (10).

2. Embrayage à friction (1) selon la revendication 1, dans lequel le point de contact (20) est en contact avec le ressort à disque (8) dans la direction radiale (12) dans la zone du palier de pivotement (13).

3. Embrayage à friction (1) selon l'une quelconque des revendications précédentes, dans lequel l'embrayage à friction (1) comporte une section de came (22), laquelle est disposée dans la direction radiale (12) à l'extérieur de l'au moins un ressort à lame (10) sur le plateau de pression (5) et sur laquelle repose le bord de force (11) du ressort à disque (8).

4. Embrayage à friction (1) selon l'une quelconque des revendications précédentes, dans lequel une force d'appui (23) de l'embrayage à friction (1) est fournie exclusivement par l'au moins un ressort à lame (10), dans lequel la force d'appui (23) peut être alimentée au moins partiellement au moyen du plateau de pression (5) dans le bord de force (11) du ressort à disque (8).

5. Embrayage à friction (1) selon la revendication 4, dans lequel la force d'appui (23) est fournie d'une part par la première section (14) en tant que première force d'appui partielle (24) et d'autre part par la seconde section (18) en tant que seconde force d'appui partielle (25) de l'au moins un ressort à lame (10).

6. Embrayage à friction (1) selon la revendication 5, dans lequel la seconde section (18) fournit une seconde force d'appui partielle (24) agissant comme une force de compression, laquelle s'oppose à un déplacement du ressort à disque (8) dans la direction axiale (4).

7. Embrayage à friction (1) selon l'une quelconque des revendications précédentes, dans lequel une première rigidité en N/mm [Newton par millimètre] de la première section (15) agissant dans la direction axiale (4) constitue au plus 50 % d'une seconde rigidité en N/mm de la seconde section (18) agissant dans la direction axiale (4).

8. Embrayage à friction (1) selon l'une quelconque des revendications précédentes, dans lequel le ressort à lame (10) est une pièce en tôle et le point de contact (20) est formé par un pli (26) de la pièce en tôle.

9. Embrayage à friction (1) selon la revendication 8, dans lequel le pli (26) s'étende du ressort à lame (10) dans la direction axiale (4) vers le ressort à disque (8), dans lequel le pli (26) est disposé sur un bord extérieur (27) du ressort à lame (10) dans la direction radiale (12).

10. Embrayage à friction (1) selon l'une quelconque des revendications précédentes, dans lequel l'embrayage à friction (1) comporte au moins trois ressorts à lames (10) ou ensembles de ressorts à lames, lesquels sont disposés uniformément répartis le long de la direction circonférentielle (16).
